# NEUE EUROPÄISCHE PATENTSCHRIFT

(11) **EP 1 358 018 B2**
(45) Veröffentlichungstag und Bekanntmachung des Hinweises auf die Entscheidung über den Einspruch: **29.06.2011**
(45) Hinweis auf die Patenterteilung: 31.10.2007
(21) Anmeldenummer: 01273719.3
(22) Anmeldetag: 21.12.2001
(51) Int. Cl.: B05D 5/08, B05D 7/00

(54) **SELBSTREINIGENDE LACKBESCHICHTUNG UND VERFAHREN UND MITTEL ZUR HERSTELLUNG DERSELBEN**
SELF-CLEANING PAINT COATING AND A METHOD AND AGENT FOR PRODUCING THE SAME
REVETEMENT AUTONETTOYANT SOUS FORME DE PEINTURE ET PROCEDE ET AGENT PERMETTANT DE FABRIQUER LADITE PEINTURE

(30) Priorität: 10.02.2001 DE 10106213
(43) Veröffentlichungstag der Anmeldung: 05.11.2003
(73) Patentinhaber: Ferro GmbH, 60327 Frankfurt (DE)
(72) Erfinder: BAUMANN, Martin, 60599 Frankfurt/Main (DE); FRITSCHE, Klaus-Dieter, 04680 Colditz (DE); KORBELARZ, Dagmar, 63457 Hanau (DE); LUDWIG, Stephan, 63543 Neuberg (DE); POTH, Lutz, 64380 Rossdorf (DE)
(74) Vertreter: Reinhardt, Markus
(86) Internationale Anmeldenummer: PCT/EP2001/015242
(87) Internationale Veröffentlichungsnummer: WO 2002/064266

(56) Entgegenhaltungen:
- EP-A- 0 497 189
- EP-A- 0 658 525
- WO-A1-98/51747
- DE-A- 10 063 739
- DE-A1- 19 917 366
- US-A- 5 616 388

## Beschreibung

Die Erfindung richtet sich auf selbstreinigende Lackbeschichtungen auf beliebigen Substraten; die Lackbeschichtungen zeigen den Lotus-Effekt^{®}. Weitere Gegenstände der Erfindung richten sich auf Verfahren zur Herstellung der selbstreinigenden Lackbeschichtungen.

Es ist bekannt, dass zur Erzielung eines guten Selbstreinigungseffekts einer Oberfläche diese neben einer guten Hydrophobie auch eine mikrorauhe Oberflächenstruktur aufweisen muss. Beide Merkmale sind in der Natur, beispielsweise im Lotusblatt, realisiert; die aus einem hydrophoben Material gebildete Oberfläche weist pyramidenförmige Erhebungen auf, welche ein paar µm voneinander entfernt sind. Wassertropfen kommen im wesentlichen nur mit diesen Spitzen in Berührung, so dass die Kontaktfläche winzig klein ist, was eine sehr niedrige Adhäsion zur Folge hat. Diese Zusammenhänge sowie die prinzipielle Anwendbarkeit des "Lotuseffekts" auf technische Oberflächen lehren A.A. Abramzon, Khimia i Zhizu (1982), Nr. 11, 38-40.

Ohne Bezug auf den Lotuseffekt sind aus der US-Patentschrift 3,354,022 wasserabstoßende Oberflächen bekannt, wobei die Oberfläche eine mikrorauhe Struktur mit Erhebungen und Vertiefungen aufweist und aus einem hydrophoben Material, insbesondere einem fluorhaltigen Polymer, gebildet ist. Gemäß einer Ausführungsform kann auf keramische Ziegel oder auf Glas eine Oberfläche mit Selbstreinigungseffekt aufgebracht werden, indem das Substrat mit einer Suspension beschichtet wird, welche Glaskugeln mit einem Durchmesser im Bereich von 3 bis 12 µm und ein Fluorkohlenstoffwachs auf der Basis eines Fluoralkyl-ethoxymethacrylat-Polymers enthält. Nachteile derartiger Beschichtungen sind deren geringe Abriebsbeständigkeit und mäßiger Selbstreinigungseffekt.

Die EP-Offenlegungsschrift 0 909 747 A1 lehrt ein Verfahren zur Erzeugung einer Selbstreinigungseigenschaft von Oberflächen, insbesondere Dachziegeln. Die Oberfläche weist hydrophobe Erhebungen mit einer Höhe von 5 bis 200 µm auf. Hergestellt wird eine derartige Oberfläche durch Aufbringen einer Dispersion von Pulverpartikeln aus einem inerten Material in einer Siloxan-Lösung und anschließendes Aushärten. Wie im zuvor gewürdigten Verfahren sind die strukturbildenden Partikel nicht abriebsstabil auf der Oberfläche des Substrats fixiert.

Das EP-Patent 0 772 514 lehrt selbstreinigende Oberflächen von Gegenständen mit einer künstlichen Oberflächenstruktur aus Erhebungen und Vertiefungen, wobei der Abstand zwischen den Erhebungen im Bereich von 5 bis 200 µm und die Höhe der Erhebungen im Bereich von 5 bis 100 µm liegt und die Struktur aus hydrophoben Polymeren oder haltbar hydrophobierten Materialien besteht. Zur Ausbildung der Strukturen eignen sich Ätz- und Prägeverfahren, ferner Beschichtungsverfahren, wie Aufkleben eines hydrophoben Polymeren. Soweit erforderlich, schließt sich an die Strukturbildung eine Hydrophobierung, beispielsweise eine sogenannte Silanisierung, an. Die selbstreinigenden, also durch leicht bewegtes Wasser zu reinigenden Oberflächen, wie Beschichtungen von Fahrzeugen, dürfen keinen starken mechanischen Beanspruchungen ausgesetzt werden, da hierdurch die Fähigkeit zur Selbstreinigung verloren geht.

Gleichfalls strukturierte Oberflächen mit hydrophoben Eigenschaften lehrt die EP 0 933 388 A2. Die Oberfläche weist Erhebungen mit einer mittleren Höhe von 50 nm bis 10 µm und einen mittleren Abstand zwischen 50 nm bis 10 µm sowie eine Oberflächenenergie des unstrukturierten Materials von 10 bis 20 mN/m auf. Zur Erzielung einer besonders niedrigen Oberflächenenergie und damit hydrophober und oleophober Eigenschaften weist die strukturierte Oberfläche fluorhaltige Polymere auf oder sie wurde unter Einsatz von Alkylfluorsilanen behandelt. Hinweise, zur Strukturierung der Oberfläche anstelle der hier offenbarten Formgebungsverfahren auch Beschichtungsverfahren zu verwenden, lassen sich diesem Dokument nicht entnehmen

Die DE-Anmeldung 100 63 739.6 lehrt Substrate wie Glas, Keramik, Kunststoff, Metalle sowie glasierte und emaillierte Substrate mit einer selbstreinigenden Oberfläche. Die selbstreinigende Oberfläche umfasst strukturbildende Partikel mit einem mittleren Durchmesser von weniger als 100 nm, insbesondere weniger als 50 nm und mindestens 5 nm, und ein schichtbildendes Material, wobei es sich hierbei um ein anorganisches oder organisches Material handelt. Die strukturbildenden Partikel sind mittels des schichtbildenden Materials auf dem Substrat fixiert. Ein Teil der Primärpartikel und/oder Agglomerate derselben ragen per se oder mit schichtbildendem Material überzogen zumindest teilweise aus der Oberfläche und bilden auf diese Weise Erhebungen und Vertiefungen im nanoskaligen Bereich. Die strukturierte Oberfläche weist zumindest teilweise eine hydrophobe Beschichtung auf. Zur Herstellung derartiger selbstreinigender Oberflächen wird ein Mittel, das strukturbildende Partikel und ein anorganisches oder organisches schichtbildendes Material enthält, mittels bekannter Beschichtungsverfahren, beispielsweise jenen einer Lackierung, auf das Substrat aufgebracht. Nach dem Ausbilden einer zusammenhängenden und fest haftenden Schicht durch eine thermische Behandlung schließt sich eine Hydrophobierung, beispielsweise unter Verwendung fluorhaltiger Silane und/oder fluorhaltiger Siloxane, an. Obgleich das in diesem Dokument gelehrte Verfahren auch auf andere als die darin genannten Substrate anwendbar ist, werden selbstreinigende Lackbeschichtungen, welche eine Basislackschicht und eine Deckschicht mit einer künstlichen Oberflächenstruktur umfassen, nicht genannt. Diesem Dokument lässt sich auch keine Anregung entnehmen, wonach das zur Herstellung einer selbstreinigenden Oberfläche zu verwendende Mittel, außer den strukturbildenden Partikeln und einem anorganischen oder organischen Bindemittel gleichzeitig ein Hydrophobierungsmittel enthält. Bei dem in diesem Dokument gelehrten Verfahren erfolgen die Ausbildung der Oberflächenstruktur und die Hydrophobierung in getrennten Schritten.

Aufgabe der vorliegenden Erfindung ist es demgemäß, weitere Substrate mit einer selbstreinigenden Oberfläche aufzuzeigen.

Die genannten Aufgaben sowie weitere, wie sie sich aus der nachfolgenden Beschreibung der Erfindung ergeben, werden durch die erfindungsgemäßen selbstreinigenden Lackbeschichtungen sowie das Verfahren gelöst.

Gefunden wurde eine selbstreinigende Lackbeschichtung, umfassend eine Basislackschicht und eine Deckschicht mit einer aus Partikeln gebildeten künstlichen Oberflächenstruktur aus Erhebungen und Vertiefungen, die dadurch gekennzeichnet ist, dass die Partikel einen mittleren Teilchendurchmesser von weniger als 50 nm und mindestens 5 nm aufweisen und zumindest teilweise mittels eines Bindemittelsystems in der Deckschicht gebunden sind, die mittlere Höhe und der mittlere Abstand der Erhebungen weniger als 50 nm betragen und die Oberfläche oder Deckschicht zumindest teilweise hydrophob ist.

Die erfindungsgemäße selbstreinigende Lackbeschichtung weist eine nanoskalige Oberflächenstruktur mit hydrophobem Charakter auf. Da die strukturbildenden Primärpartikel, welche einen mittleren Durchmesser von < 50 nm bis etwa 5 nm, aufweisen, auch im gewissen Umfang Agglomerate bilden können, kann die Oberflächenstruktur außer den zuvor genannten Erhebungen und Vertiefungen auch eine Überstruktur mit größeren Abständen und Höhen zeigen. Im allgemeinen liegen die mittleren Höhen und Abstände der Erhebungen der Überstruktur noch deutlich unter 1 µm.

Die strukturierte Deckschicht kann durch eine separat aufgebrachte Hydrophobierungsschicht, welche nur wenige Atomlagen dick sein muss, hydrophobiert worden sein, gemäß einer bevorzugten Ausführungsform der Erfindung ist jedoch das Hydrophobierungmittel Bestandteil der strukturbildende Partikel und ein ausgehärtetes Bindemittelsystem umfassenden Deckschicht.

Die erfindungsgemäßen selbstreinigenden Lackbeschichtungen weisen einen außerordentlich guten Selbstreinigungseffekt auf, der sich auch in einem sehr niedrigen Abrollwinkel von < 3 °C und vorzugsweise < 1 °C wiederspiegelt. Nachdem das EP Patent 0 772 514 lehrt, dass der Abstand zwischen den Erhebungen einer selbstreinigenden Oberflächenstruktur im Bereich von 5 bis 200 µm liegen soll und in der EP Patentanmeldung 0 933 388 eine mittlere Höhe und ein mittlerer Abstand der Erhebungen einer strukturierten Oberfläche mit 50 nm bis 10 µm angegeben werden, war es nicht vorhersehbar, dass eine Lackbeschichtung mit einer Deckschicht mit einer wesentlich feineren Oberflächenstruktur und einem hydrophoben Charakter sehr gute Selbstreinigungseigenschaften aufweist. Aufgrund des mittleren Durchmessers der strukturbildenden Partikel und der dadurch bewirkten erfindungsgemäßen Oberflächenstruktur, sind die erfindungsgemäßen Lackbeschichtungen auch wesentlich abriebsbeständiger als selbstreinigende Oberflächen, welche strukturbildende Partikel mit einem wesentlich größeren mittleren Durchmesser, beispielsweise > 1 µm, in einer Bindemittelschicht gebunden enthalten.

Bei den strukturbildenden Partikeln kann es sich um organische oder anorganische Stoffe handeln. Unter den anorganischen Stoffen sind beispielhaft zu nennen: Metalloxide, Mischoxide, Silikate, Sulfate, Phosphate, Borate, Metallsulfide, -oxosulfide, -selenide und -sulfoselenide, Metallnitride und -oxidnitride sowie Metallpulver. Unter den organischen strukturbildenden Partikeln sind beispielhaft Ruße und nanoskalige organische polymere Partikel, darunter fluorhaltige Polymere, zu nennen. Strukturbildende Partikel mit dem anspruchsgemäßen Teilchendurchmesser, wie insbesondere etwa 5 nm bis kleiner 50 nm, sind im Handel erhältlich. Ansonsten lassen sie sich durch an sich bekannte Fällungsverfahren oder durch pyrogene Verfahren, wobei gasförmige Ausgangsstoffe in pulverförmige Stoffe überführt werden, gewinnen. Unter den strukturbildenden Partikeln handelt es sich besonders bevorzugt um natürliche, gefällte oder pyrogen hergestellte Metalloxide aus der Reihe Kieselsäure (SiO₂), Titandioxid (TiO₂), Aluminiumoxid (Al₂O₃), Zirkoniumdioxid (ZrO₂) und Zinndioxid (SnO₂). Besonders bevorzugt handelt es sich bei diesen Oxiden um pyrogen hergestellte Oxide und hierunter insbesondere um Kieselsäure. Pyrogene Kieselsäuren sind im Handel mit einer mittleren Primärteilchengröße im Bereich von etwa 5 bis 40 nm erhältlich.

Die Deckschicht erfindungsgemäßer selbstreinigender Lackschichten enthält außer den strukturbildenden Partikeln ein ausgehärtetes Bindemittelsystem, insbesondere ein organisches Bindemittelsystem. Die strukturbildenden Primärpartikel, sowie Agglomerate derselben sind in dem Bindemittelsystem derart fixiert, dass sich die Oberflächenstruktur ausbildet. Bei dem Bindemittelsystem kann es sich um ein Ein- oder Mehrkomponenten-System handeln, und zusätzlich kann ein in der Deckschicht enthaltenes Hydrophobierungsmittel Bestandteil des Bindemittelsystems sein. Letzteres ist der Fall, wenn sowohl das Bindemittelsystem als auch das Hydrophobierungsmittel reaktive Gruppen enthalten, welche bei der Aushärtung miteinander reagieren.

Gemäß einer Ausführungsform der erfindungsgemäßen Lackbeschichtung entspricht das Bindemittelsystem der Basislackschicht im wesentlichen jenem der Deckschicht. Wie gezeigt, kann in letztere jedoch zusätzlich ein reaktives Hydrophobierungsmittel eingebaut worden sein. Gemäß einer alternativen Ausführungsform sind die Bindemittelsysteme der Basislackschicht und der Deckschicht - unabhängig von einem gegebenenfalls eingebauten reaktiven Hydrophobierungsmittel - chemisch unterschiedlich. Sofern die Bindemittelsysteme in der Basislackschicht und in der Deckschicht im wesentlichen gleich sind, wird als Deckschicht jener Teil der Gesamtbeschichtung betrachtet, in welchem sich die erfindungsgemäßen strukturbildenden Partikel befinden.

Das Gewichtsverhältnis des Bindemittelsystems zu den darin gebundenen strukturbildenden Partikeln kann in weiten Grenzen liegen; das Verhältnis wird maßgeblich durch die Applikationsform des Mittels zur Herstellung der Deckschicht bestimmt. Üblicherweise liegt das Gewichtsverhältnis im Bereich von 1 zu 50 bis 10 zu 1, vorzugsweise jedoch im Bereich von 1 zu 5 bis 5 zu 1. Es ist wesentlich, dass die strukturbildenden Partikel in ausreichender Menge anwesend sind, so dass sie während des Aufbringens und der Härtung der Deckschicht nicht vollständig in diese einsinken, sondern die erfindungsgemäß erforderliche nanoskalige Oberflächenstruktur ausbilden.

Die strukturierte Deckschicht der erfindungsgemäßen Lackbeschichtung kann eine nach der Strukturbildung aufgebrachte Hydrophobierungsschicht aufweisen, vorzugsweise sind jedoch die Hydrophobierungsmittel gleichmäßig innerhalb der Deckschicht verteilt und in einer solchen Konzentration anwesend, dass eine ausreichende Oberflächenhydrophobierung resultiert. Vorzugsweise sind solche Hydrophobierungsmittel anwesend, welche mit Bestandteilen des Bindemittels der Deckschicht und/oder mit reaktiven Gruppen der strukturbildenden Partikel eine chemische Bindung eingegangen haben. Zusätzlich oder alternativ kann ein zunächst monomeres oder oligomeres Hydrophobierungsmittel während der Aushärtung der Deckschicht auch selbst ein polymeres Bindemittelsystem ausbilden und die strukturbildenden Partikel auf der Basislackschicht fixieren.

Sowohl die Basislackschicht, als auch die Deckschicht können chemisch unterschiedliche Bindemittelsysteme aufweisen. Für die Basisdeckschicht kommen im wesentlichen alle bekannten Lacksysteme in Frage. Es kann sich hierbei um organische Bindemittel in einem organischen, organisch-wässrigen oder rein wässrigen Lösungsmittelsystem handeln. Einsetzbar sind auch strahlenhärtende Lacksysteme und Pulverlacksysteme. Beispiele geeigneter Bindemittel sind: Cellulose-basierte Bindemittel, Chlorkautschuk, Polyvinylverbindungen, Acryl- und Methacrylharze, Alkydharze und andere Polyesterharze, Polymethanharze, Epoxidharze, Melamin-, Harnstoff- und Phenolharze, sowie Kohlenwasserstoffharze.

Gemäß einer bevorzugten Ausführungsform basiert die Basislackschicht auf einem lösungsmittelfreien oder lösungsmittelarmen Bindemittelsystem, beispielsweise einem solchen, wie sie in Pulverlacken und strahlungshärtenden Lacken, Anwendung finden. Bei den Bindemitteln für Pulverlacke handelt es sich insbesondere um Epoxid-, Polyestersysteme, Polyester-Triglycidylisocyanurat-Systeme, andere Epoxidharzsysteme, Polyester-Polyurethan-Systeme und in geringerem Umfang auch thermoplastische Harze, wie solche auf der Basis von Polyethylen, Polyamid, PVC, Ethylen-Vinylalkohol-Copolymer und thermoplastische Polyester. Unter den strahlungshärtenden Harzsystemen, welche im wesentlichen auf einer Kombination aus einem Präpolymer, einem Monomer und einem Photoinitiator beruhen, sind beispielhaft zu nennen acrylierte Epoxidharze, acrylierte Urethane und Polyester-Acrylate; bei den Monomeren handelt es sich insbesondere um mehrfunktionelle Acrylverbindungen, wie Acrylester mehrwertiger Alkohole.

Die verwendungsfähige erfindungsgemäße selbstreinigende Lackbeschichtung enthält das oder die in der Basislackschicht und Deckschicht enthaltenen Bindemittel in ausgehärtetem Zustand. Üblicherweise ist die Schichtdicke der Deckschicht wesentlich dünner als die Schichtdicke der Basislackschicht. Zweckmäßigerweise liegt die Schichtdicke der Deckschicht im Bereich des 1 bis 10-fachen des mittleren Partikeldurchmessers der strukturbildenden Partikel.

Ein weiterer Gegenstand der Erfindung ist ein Verfahren zur Herstellung der erfindungsgemäßen selbstreinigenden Lackbeschichtung. Das Verfahren umfasst folgende Schritte:
1. Beschichten eines Substrats mit einem eine Basislackschicht bildenden gefärbten oder ungefärbten, pigmentierten oder nicht-pigmentierten Beschichtungsmittel mittels eines bekannten auf das Beschichtungsmittel abgestimmten Verfahrens;
2. Aufbringen eines eine Deckschicht bildenden flüssigen bis pastösen Mittels auf eine ausgehärtete, angehärtete, gelierte oder ungehärtete Basislackschicht mittels eines auf den Härtungszustand der Basislackschicht abgestimmten üblichen Beschichtungsverfahrens, wobei das Mittel die zuvor beschriebene Zusammensetzung aufweist;
3. Aushärten der Deckschicht und, soweit erforderlich, der Basislackschicht.

Das Mittel zur Herstellung der Deckschicht einer bevorzugten selbstreinigenden Lackbeschichtung - diese bevorzugte Lackbeschichtung enthält ein Hydrophobierungsmittel in gleichmäßiger Verteilung innerhalb der Deckschicht. Das Mittel weist in der Regel eine flüssige bis viskose Konsistenz auf und enthält als Hauptbestandteile ein flüssiges Medium, mindestens ein darin suspendiertes oder emulgiertes, vorzugsweise aber gelöstes Hydrophobierungsmittel, sowie darin gleichmäßig suspendierte strukturbildende Partikel mit einem mittlerem Teilchendurchmesser von weniger als 50 nm bis etwa 5 nm, gegebenenfalls auch bis 1 nm. Das Hydrophobierungsmittel kann selbst das flüssige Medium darstellen oder ein Bestandteil desselben sein, vorzugsweise ist jedoch das Hydrophobierungsmittel in einem organischen oder organisch-wässrigen Lösungsmittelsystem oder in Wasser gelöst oder emulgiert/suspendiert.

Bei den in dem Mittel enthaltenen strukturbildenden Partikeln handelt es sich um jene, welche bereits zuvor beschrieben wurden. Bevorzugt handelt es sich um ein oder mehrere Metalloxide aus der Reihe SiO₂, TiO₂, Al₂O₃, ZrO₂ und SnO₂.

Das Mittel enthält in einer bevorzugten Ausführungsform strukturbildende Partikel und Hydrophobierungsmittel in einem Gewichtsverhältnis im Bereich von 1 zu 5 bis 5 zu 1. Die Konzentration sowie das Gewichtsverhältnis dieser Bestandteile in dem Mittel richten sich maßgeblich nach den gewünschten Effekten und der Eignung des Hydrophobierungsmittels, bei gleichmäßiger Verteilung innerhalb der Deckschicht eine gute Hydrophobierung der Oberfläche zu ermöglichen. Bevorzugte Mittel enthalten strukturbildende Partikel, insbesondere Oxide, in einer Menge von 0,1 bis 5 Gew.-% und Hydrophobierungsmittel in einer Menge von 0,1 bis 5 Gew.-%.

Zweckmäßigerweise enthält das Mittel ein oder mehrere organische Lösungsmittel, welche in der Lage sind das oder die Hydrophobierungsmittel, sowie das oder die gegebenenfalls anwesenden Bindemittel oder Vorstufen derselben zu lösen. Geeignete Lösungsmittel sind beispielsweise einwertige Alkohole mit 1 bis 4 C-Atomen, Mono-, Di- und Trialkylenglykol-monoalkylether, wobei die Alkylengruppe meistens 2 oder 3 C-Atome umfasst und die Alkylgruppe 1 bis 4 C-Atome.

Sofern das Mittel bindemittelfrei ist, muss, um eine kratzfeste und auf der Basislackschicht festhaftende Deckschicht zu erhalten, das Lösemittelsystem des Mittels so ausgewählt werden, dass dieses ein Lösungsmittel enthält, welches in der Lage ist, das Bindemittelsystem der Basislackschicht anzulösen, so dass die strukturbildenden Partikel in oberflächennahen Bereichen der Basislackschicht fixiert werden und die erforderliche Struktur bilden können. Die Lösungsmittelauswahl richtet sich in diesem Falle sowohl nach der chemischen Natur des Bindemittelsystems als auch danach, in wie weit das Basislacksystem durch Verdampfen von Lösungsmitteln und/oder durch Gelierung teilweise oder vollständig ausgehärtet ist. Vorzugsweise werden deckschichtbildende bindemittelfreie Mittel auf eine Basislackschicht aufgebracht, welche noch nicht vollständig getrocknet, geliert oder ausgehärtet ist.

Ein bevorzugtes Mittel zur Herstellung der Deckschicht enthält außer den strukturbildenden Partikeln, dem Hydrophobierungsmittel und üblicherweise einem oder mehreren Lösungsmitteln zusätzlich ein oder mehrere Lackbindemittel oder Vorstufen derselben. Bei den Vorstufen handelt es sich um polymerisierbare und/oder polykondensierbare und/oder einer Polyaddition zugängliche Verbindungen. Sofern das Lackbindemittel in Form einer oder mehrerer Vorstufen anwesend ist, handelt es sich bei den Vorstufen üblicherweise um eine Kombination aus einer oligomeren oder polymeren Verbindung und eine zweite, gegebenenfalls monomere, Komponente, welche während des Härtungsvorgangs mit der oligomeren oder polymeren Verbindung reagiert und das gehärtete Bindemittel bildet. Derartige Kombinationen von Vorstufen eines Lackbindemittels können beispielsweise in strahlenhärtenden Lacksystemen sowie in Zweikomponenten- Pulverlacksystemen anwesend sein. Ein Bindemittel oder/und Vorstufen enthaltendes Mittel zur Herstellung der Deckschicht, kann eines oder mehrere der bei der Beschreibung der selbstreinigenden Lackbeschichtung genannten Harzsysteme enthalten. Der Fachmann wird solche Bindemittel heranziehen, welche einerseits eine gute Fixierung der strukturbildenden Partikel gewährleisten, andererseits eine gute Haftung zur Basislackschicht ermöglichen. Die Einsatzmenge an Lackbindemittel oder Vorstufen in dem Deckschicht bildenden Mittel kann in weiten Grenzen variieren. Zweckmäßigerweise enthält das Mittel ein oder mehrere Lackbindemittel oder Vorstufen derselben und strukturbildende Partikel in einem Gewichtsverhältnis im Bereich von 1 zu 50 bis 10 zu 1, insbesondere 1 zu 5 bis 5 zu 1.

Bei dem in den Mitteln enthaltenen Hydrophobierungsmittel kann es sich um bekannte Hydrophobierungsmittel, insbesondere um fluorhaltige Hydrophobierungsmittel handeln. Bevorzugte Hydrophobierungsmittel sind Alkyl- und insbesondere Fluoralkylsilane sowie oligomere Alkyl- und insbesondere Fluoralkylsiloxane, welche jeweils eine oder mehrere reaktive Gruppierungen enthalten, womit chemische Bindungen zu den strukturbildenden Partikeln und/oder Bestandteilen des Bindemittelsystems der Deckschicht gebildet werden können. Vorzugsweise enthalten die Silane beziehungsweise Siloxane als reaktive Gruppen eine oder mehrere Alkoxygruppen, wie Ethoxygruppen, oder Acyloxygruppen, wie Acetoxygruppen. Derartige funktionelle Gruppen erlauben die Bildung einer chemischen Bindung zu beispielsweise Silanolgruppen von strukturbildenden Kieselsäurepartikeln aber auch eine Bindung zu funktionellen Gruppen von Epoxid- oder Polyesterharzen. Gleichzeitig kann das Hydrophobierungsmittel über diese reaktiven Gruppen selbst polykondensisieren. Besonders bevorzugt zu verwendende Silanierungsmittel sind Tridekafluoroctyltriethoxysilan und Oligomere hiervon. Derartige Produkte sind in dem flüssigen Medium des Mittels gelöst oder stellen selbst einen Bestandteil desselben dar.

Bei den üblichen Beschichtungsverfahren zur Herstellung der Basislackschicht handelt es sich im Falle der Verwendung eines pulverförmigen Beschichtungsmittels um ein Pulverbeschichtungsverfahren, beispielsweise elektrostatisches Beschichten, Wirbelschichtbeschichten oder Trockenauftrag mittels einer Rakel oder dergleichen. Bei Verwendung eines flüssigen bis pastösen Lacks zur Herstellung der Basislackschicht können Beschichtungsverfahren wie Streichen, Tauchen und Besprühen zur Anwendung gelangen. Da es sich bei dem Deckschicht bildenden Mittel im allgemeinen um ein flüssiges bis pastöses Mittel handelt, kommen, wenn die Basislackschicht beim Auftrag der Deckschicht noch nicht durchgehärtet ist, zur Beschichtung insbesondere Sprüh- und Tauchverfahren in Frage. Sofern die Basislackschicht bereits ausgehärtet ist, können auch bekannte andere Lackierverfahren, wie Streichverfahren sowie bekannte Druckverfahren zur Anwendung gelangen.

Zweckmäßiger Weise wird die Basislackschicht vor dem Auftrag der Deckschicht so behandelt, dass sich eine weitgehend geschlossene Schicht gebildet hat und, sofern Lösungsmittel in dem Beschichtungsmaterial enthalten waren, ein Teil leichtflüchtiger Bestandteile verdunstet ist. Beim Einsatz eines pulverförmigen Beschichtungsmittels schließt sich demgemäß an den eigentlichen Beschichtungsprozess eine thermische Behandlung an, wobei die Pulverpartikel zusammenfließen und das Bindemittel zumindest teilweise geliert. Sofern das die Deckschicht bildende Mittel kein eigenes Bindemittel enthält, sondern die Fixierung der strukturbildenden Partikel im obersten Bereich der Basislackschicht erfolgt, ist es zweckmäßig, dieses Mittel vor der Härtung oder bei einem solchen Härtungs- /Gelierungszustand des Bindemittelsystems der Basislackschicht aufzutragen, der es ermöglicht, dass ein in dem Mittel enthaltenes Lösungsmittel das Bindemittel der Basislackschicht ausreichend anlöst, so dass dieses Bindemittel auch Bindemittel der Deckschicht wird.

Gemäß einer besonders bevorzugten Ausführungsform wird ein die Deckschicht bildendes Mittel aufgetragen, das die folgenden Hauptkomponenten enthält: 0,1 bis 5 Gew.-% strukturbildende Partikel, insbesondere Partikel mit einem mittleren Teilchendurchmesser von weniger als 50 nm und mindestens etwa 5 nm; 0,1 bis 5 Gew.-% Hydrophobierungsmittel, insbesondere aus der Reihe der fluorhaltigen Alkoxysilane und Alkoxysiloxane; 80 bis 99,7 Gew.-% flüssiges Medium auf der Basis von Wasser und/oder einem oder mehreren organischen Lösungsmitteln, insbesondere alkoholischen Lösungsmittel. Sofern erforderlich, können zusätzlich in geringem Umfang übliche Verarbeitungshilfsmittel, wie Suspensionshilfsmittel und Verlaufshilfsmittel, in üblicher geringer Konzentration anwesend sein.

Die Aushärtung der Deckschicht und, sofern die Basislackschicht noch nicht ausgehärtet wurde, auch der Basislackschicht erfolgten vorzugsweise durch eine Wärmebehandlung. Zweckmäßigerweise wird diese bei mindestens 100 °C, insbesondere 150 bis 280 °C, durchgeführt. Während der Härtung kommt es auch zur chemischen Umsetzung reaktiver Gruppen des Hydrophobierungsmittels mit reaktiven Gruppen des Bindemittels und/oder der strukturbildenden Partikel.

Die Vorteile der Erfindung liegen darin, dass chemisch unterschiedlichste Lackbeschichtungen in eine gute selbstreinigende Lackbeschichtung überführt werden können. Die Beschichtungen weisen eine hohe Kratzfestigkeit auf und sind somit auch in solchen Einsatzgebieten verwendbar, in welchen mechanische Beanspruchungen nicht vollständig auszuschließen sind. Die Mittel lassen sich in einfacher Weise herstellen und wie jeder andere flüssige Lack applizieren.

Die nachfolgenden Beispiele verdeutlichen die Erfindung.

### Beispiele

Ein Aluminiumblech (9 x 6 cm, 4 mm stark) wurde mit einem Pulverlack auf der Basis eines Polyesterepoxidharzes im Trockenauftrag mittels eines Schlittens beschichtet. Die Trockenschichtdicke betrug 300 µm. Die Basislackschicht wurde unter den in der Tabelle angegebenen Bedingungen (°C/Dauer) geliert beziehungsweise ausgehärtet (Temperung).

Die Zusammensetzung (Angaben in g) des die Deckschicht bildenden Mittels folgt aus der Tabelle. Als strukturbildende Partikel wurde pyrogene Kieselsäure (Aerosil^{®} der Firma Sivento)eingesetzt, als Hydrophobierungsmittel eine alkoholische Lösung von Tridekafluoroctyltriethoxysilan (Sylan^{®} F8262 beziehungsweise F8263 der Firma Sivento). Die Bestandteile wurden mittels eines Dreiwalzwerks angepastet. Der Auftrag des Mittels erfolgte gemäß Angabe in der Tabelle. Die Auftragsmenge betrug jeweils etwa 0,25 g/Platte. Die Trocknung und Aushärtung erfolgte 20 Minuten bei 200 °C.

Die Lackbeschichtungen erwiesen sich als kratzfest und wiesen einen guten Selbstreinigungseffekt auf - Abrollwinkel unter 3 °, insbesondere unter 1 °.

**Tabelle**

| **Beispiel Nr.** | **1** | **2** | **3** | **4** | **5** | **6** | **7** |
|---|---|---|---|---|---|---|---|
| **Temperung** | | | | | | | |
| °C | 140 | 140 | 140 | 140 | 140 | 140 | 140 |
| Min | 12 | 16 | 10 | 10 | 12 | 10 | 10 |

| **Mittel** | | | | | | | |
|---|---|---|---|---|---|---|---|
| Aerosil 200 ¹⁾ | 0,25 | 2 | 2 | 1 | 1 | 1 | |
| Aerosil 380 ²⁾ | | | | | | | 1 |
| Sylan F8262 ³⁾ | 6 | | | | | | |
| Sylan F8263 ⁴⁾ | | 48 | 48 | 40 | 40 | 45 | 45 |
| Ethanol | | | | 10 | 10 | | |
| PGMME ⁵⁾ | 0,4 | 3,2 | 3,2 | | | | |
| Medium ⁶⁾ | | | | 10 | 10 | 5 | 5 |
| Auftragung | Siebdruck | Pinsel | Spritzpistole | Spritzpistole | Spritzpistole | Spritzpistole | Spritzpistole |
| **Abrollwinkel** | 3° | <3° | 2° | <2° | <2° | < 1° | <1° |
| ¹⁾ bzw. ²⁾: Primärpartikel d= 12 nm bzw. 7 nm | | | | | | | |
| ³⁾bzw. ⁴⁾: 1%ige Lösung des Silans in Alkoholen | | | | | | | |
| ⁵⁾ PGMME: Propylenglykolmonomethylether | | | | | | | |
| ⁶⁾ Medium der Firma dmc² Degussa Metals Catalysts CerdecAG enthält Hydroxypropylcellulose (ca. 10 %) als Bindemittel in einem alkoholischen Lösungsmittelgemisch. | | | | | | | |

## Patentansprüche

1. Selbstreinigende Lackbeschichtung, umfassend eine Basislackschicht und eine Deckschicht mit einer aus Partikeln gebildeten künstlichen Oberflächenstruktur aus Erhebungen und Vertiefungen, **dadurch gekennzeichnet, dass** die Partikel einen mittleren Teilchendurchmesser von weniger als 50 nm und mindestens 5 nm aufweisen, und zumindest teilweise mittels eines Bindemittelsystems in der Deckschicht gebunden sind, die mittlere Höhe und der mittlere Abstand der Erhebungen weniger als 50 nm betragen und die Oberfläche oder Deckschicht zumindest teilweise hydrophob ist.

2. Selbstreinigende Lackbeschichtung nach Anspruch 1, **dadurch gekennzeichnet, dass** die strukturbildenden Partikel ausgewählt sind aus der Reihe der Metalloxide, Mischoxide, Silikate, Sulfate, Phosphate, Borate, Ruße, Metallpulver, Metallsulfide, -selenide, -sulfoselenide und -oxosulfide, Metallnitride und -oxidnitride und organischen Polymeren und Pigmenten.

3. Selbstreinigende Lackbeschichtung nach einem der Ansprüche 1 oder 2, **dadurch gekennzeichnet, dass** es sich bei den strukturbildenden Partikeln um Metalloxide aus der Reihe SiO₂, TiO₂, Al₂O₃, ZrO₂ und SnO₂, insbesondere um deren pyrogen hergestellte Oxide handelt.

4. Selbstreinigende Lackbeschichtung nach einem der Ansprüche 1 bis 3, **dadurch gekennzeichnet, dass** die Deckschicht das Bindemittelsystem und die strukturbildenden Partikel in einem Gewichtsverhältnis im Bereich von 1 zu 50 bis 10 zu 1, insbesondere im Bereich von 1 zu 5 bis 5 zu 1, enthält.

5. Selbstreinigende Lackbeschichtung nach einem der Ansprüche 1 bis 4, **dadurch gekennzeichnet, dass** die Deckschicht und Basislackschicht das gleiche Bindemittelsystem enthalten.

6. Selbstreinigende Lackbeschichtung nach einem der Ansprüche 1 bis 5, **dadurch gekennzeichnet, dass** auf mindestens einem Teil der Oberfläche und/oder innerhalb der Deckschicht ein Hydrophobierungsmittel, insbesondere ein fluorhaltiges Hydrophobierungsmittel, chemisch mit Bestandteilen des Bindesystems der Deckschicht und/oder mit reaktiven Gruppen der strukturbildenden Partikel gebunden ist und/ oder in Form eines in Sifu gebildeten Polymers fixiert ist.

7. Selbstreinigende Lackbeschichtung nach einem der Ansprüche 1 bis 6, **dadurch gekennzeichnet, dass** die Basislackschicht und/oder die Deckschicht als Bindemittelsystem ein solches auf der Basis eines Harzes aus der Reihe der Epoxidharze, Polyesterharze, Polymethanharze, Cellulose-basierter Harze und Vinylharze enthält.

8. Verfahren zur Herstellung einer selbstreinigenden Lackbeschichtung gemäß einem der Ansprüche 1 bis 7, umfassend Beschichten eines Substrats mit einem eine Basislackschicht bildenden Beschichtungsmittel mittels eines bekannten, auf das Beschichtungsmittel abgestimmten Verfahrens und Aufbringen eines Deckschicht bildenden flüssigen bis pastören Mittels auf eine ausgehärtete, gelierte angehärtete oder ungehärtete Basislackschicht mittels eines auf den Härtungszustand der Basislackschicht abgestimmten üblichen Verfahrens zum Beschichten, Aushärten der Deckschicht und, soweit erforderlich, der Basislackschicht, **dadurch gekennzeichnet, dass** man ein die Deckschicht bildendes Mittel zur Herstellung einer Deckschicht einer selbstreinigenden Lackbeschichtung umfassend ein flüssiges Medium, mindestens einem darin gelösten Hydrophobierungsmittel und darin gleichmäßig suspendierten strukturbildenden Partikeln mit einem mittleren Teilchendurchmesser von weniger als 50 nm bis 5 nm, wobei das Mittel als strukturbildende Partikel ein oder mehrere Metalloxid aus der Reihe SiO₂, TiO₂, Al₂O₃, ZrO₂ und SnO₂ enthält und es strukturbildende Partikel und Hydrophobierungsmittel im Gewichtsverhältnis im Bereich von 1 zu 5 bis 5 zu 1 enthält verwendet.

9. Verfahren nach Anspruch 8, **dadurch gekennzeichnet, dass** das flüssige Medium ein oder mehrere Lackbindemittel oder polymerisierbare und/oder polykondensierbare und/oder einer Polyaddition zugängliche Vorstufen von Bindemitteln enthält.

10. Verfahren nach einem der Ansprüche 8 oder 9, **dadurch gekennzeichnet, dass** das Mittel Lackbindemittel oder Vorstufen derselben und strukturbildende Partikel in einem Gewichtsverhältnis im Bereich von 1 zu 50 bis 10 zu 1, insbesondere 1 zu 5 bis 5 zu 1, enthält.

11. Verfahren nach einem der Ansprüche 8 bis 10, **dadurch gekennzeichnet, dass** das Mittel ein fluorhaltiges reaktives Hydrophobierungsmittel, insbesondere ein Fluoralkylalkoxysilan oder Fluoralkyl-alkoxysiloxan, enthält.

12. Verfahren nach einem der Ansprüche 8 bis 11, **dadurch gekennzeichnet, dass** das Mittel ein oder mehrere organische Lösungsmittel, insbesondere Alkohole und Etheralkohole, enthält.

13. Verfahren nach einem der Ansprüche 8-12, **dadurch gekennzeichnet, dass** man das Deckschicht bildende Mittel auf eine zumindest teilweise gelierte und/oder durch zumindest teilweises Verdampfen von in dem die Basislackschicht bildenden Beschichtungsmittel erhaltenen Lösungsmitteln zumindest teilweise getrocknete angehärtete Basislackschicht aufträgt.

14. Verfahren nach einem der Ansprüche 8-13, **dadurch gekennzeichnet, dass** man ein die Deckschicht bildendes Mittel aufträgt, das enthält:
| | |
|---|---|
| 0,1 bis 5 Gew.-% | strukturbildende Partikel, insbesondere Oxide, mit einem mittleren Teilchendurchmesser von weniger als 50 nm und mindestens etwa 5 nm; |
| 0,1 bis 10 Gew.-% | schichtbildende Bindemittel oder Vorstufen hierfür; |
| 0,1 bis 5 Gew,-% | Hydrophobierungsmittel, insbesondere aus der Reihe der fluorhaltigen Alkoxysilane und Alkoxysiloxane; |
| 80 bis 99,7 Gew.-% | Wasser und/ oder ein oder mehrere organische Lösungsmittel, insbesondere Alkohol und Etheralkohole. |

15. Verfahren nach einem der Ansprüche 8, 11 bis 13, **dadurch gekennzeichnet, dass** man ein die Deckschicht bildendes Mittel aufträgt, das strukturbildende Partikel, Hydrophobierungsmittel und ein oder mehrere organische Lösungsmittel, jedoch keine Bindemittel enthält, wobei mindestens ein Lösungsmittel die Basislackschicht oberflächlich anlöst, so dass die Deckschicht Bindemittel der Basislackschicht enthält.

16. Verfahren nach einem der Ansprüche 8 bis 15, **dadurch gekennzeichnet, dass** man nach dem Auftrag eines die Deckschicht bildenden Mittel die Beschichtung durch Wärmebehandlung bei mindestens 100 °C, insbesondere 150 bis 250 °C, aushärtet.

## Claims

1. Self-cleaning paint coating, comprising a base paint coat and a top coat with an artificial surface structure of elevations and depressions formed from particles, **characterised in that** the particles have a mean particle diameter of less than 50 nm and at least 5 nm, and are bound at least to some extent in the top coat by means of a binder system, the mean height and the mean interspacing of the elevations are less than 50 nm, and the surface or top coat is at least to some extent hydrophobic.

2. Self-cleaning paint coating according to claim 1, **characterised in that** the structure-forming particles are selected from the group comprising metal oxides, mixed oxides, silicates, sulphates, phosphates, borates, carbon blacks, metal powders, metal sulphides, selenides, sulfoselenides and oxosulfides, metal nitrides and oxide-nitrides, and organic polymers and pigments.

3. Self-cleaning paint coating according to one of claims 1 and 2, **characterised in that** the structure-forming particles are metal oxides from the group SiO₂, TiO₂, Al₂O₃, ZrO₂ and SnO₂, in particular their pyrogenically produced oxides.

4. Self-cleaning paint coating according to one of claims 1 to 3, **characterised in that** the top coat contains the binder system and the structure-forming particles in a weight ratio in the range from 1:50 to 10:1, in particular in the range from 1:5 to 5:1.

5. Self-cleaning paint coating according to one of claims 1 to 4, **characterised in that** the top coat and base paint coat contain the same binder system.

6. Self-cleaning paint coating according to one of claims 1 to 5, **characterised in that** a hydrophobing agent, in particular a fluorine-containing hydrophobing agent, is chemically bound with constituents of the binder system of the top coat and/or with reactive groups of the structure-forming particles and/or is fixed in the form of a polymer formed *in situ,* on at least a part of the surface and/or within the top coat.

7. Self-cleaning paint coating according to one of claims 1 to 6, **characterised in that** the base paint coat and/or the top coat contains as binder system one based on a resin from the group comprising epoxy resins, polyester resins, polymethane resins, cellulose-based resins and vinyl resins.

8. Process for the production of a self-cleaning paint coating according to one of claims 1 to 7, comprising coating a substrate with a coating agent forming a base paint coat, by means of a known method adapted to the coating agent, and applying a liquid to pasty agent forming a top coat to a hardened, gelled-hardened or unhardened base paint coat by means of a conventional method, adapted to the hardening state of the base paint layer, for coating, hardening the top coat and, if necessary, the base paint coat, **characterised in that** use is made of an agent, which forms the top coat, for the production of a top coat of a self-cleaning paint coating comprising a liquid medium, at least one hydrophobing agent dissolved therein and structure-forming particles with a mean particle diameter of less than 50 nm down to 5 nm uniformly suspended therein, wherein said agent contains as structure-forming particles one or more metal oxides from the group comprising SiO₂, TiO₂, Al₂O₃, ZrO₂ and SnO₂ and contains structure-forming particles and hydrophobing agent in a weight ratio in the range from 1:5 to 5:1.

9. Process according to claim 8, **characterised in that** the liquid medium contains one or more paint binders or polymerisable and/or polycondensable and/or binder precursors accessible by a polyaddition.

10. Process according to one of claims 8 and 9, **characterised in that** the agent contains paint binders or precursors thereof and structure-forming particles in a weight ratio in the range from 1:50 to 10:1, in particular 1:5 to 5:1.

11. Process according to one of claims 8 to 10, **characterised in that** the agent contains a fluorine-containing reactive hydrophobing agent, in particular a fluoroalkyl-alkoxysilane or fluoroalkyl-alkoxy siloxane.

12. Process according to one of claims 8 to 11, **characterised in that** the agent contains one or more organic solvents, in particular alcohols and ether alcohols.

13. Process according to one of claims 8 to 12, **characterised in that** the agent forming the top coat is applied to an at least partially gelled and/or hardened base paint coat that is at least partially dried by at least partial evaporation of solvents contained in the coating agent forming the base paint coat.

14. Process according to one of claims 8 to 13, **characterised in that** an agent forming the top coat is applied, which contains:
| | |
|---|---|
| 0.1 to 5 wt.% | of structure-forming particles, in particular oxides, with a mean particle diameter of less than 50 nm and at least about 5 nm; |
| 0.1 to 10 wt.% | of coat-forming binders or precursors thereof; |
| 0.1 to 5 wt.% | of hydrophobing agents, in particular from the group comprising fluorine-containing alkoxysilanes and alkoxysiloxanes; |
| 80 to 99.7 wt.% | of water and/or one or more organic solvents, in particular alcohol and ether alcohols. |

15. Process according to one of claims 8 or 11 to 13, **characterised in that** an agent forming the top coat is applied which contains structure-forming particles, hydrophobing agent and one or more organic solvents, but no binder, wherein at least one solvent superficially solubilises the base paint coat, so that the top coat contains binder of the base paint coat.

16. Process according to one of claims 8 to 15, **characterised in that** after the application of an agent forming the top coat the coating is hardened by heat treatment at at least 100°C, in particular at 150° to 250°C.

## Revendications

1. Revêtement de laque autonettoyant comprenant une couche de laque de fond et une couche de finition avec une structure superficielle synthétique formée par des particules avec des bosses et des creux, **caractérisé en ce que** les particules présentent un diamètre moyen inférieur à 50 nm et d'au moins 5 nm et sont liées au moins partiellement à l'aide d'un système de liant dans la couche de finition, la hauteur moyenne et la distance moyenne entre les bosses sont inférieures à 50 nm et la surface ou couche de finition est au moins partiellement hydrophobe.

2. Revêtement de laque autonettoyant selon la revendication 1, **caractérisé en ce que** les particules formant la structure sont choisies dans le groupe des oxydes métalliques, des oxydes mixtes, des silicates, des sulfates, des phosphates, des borates, des suies, des poudres métalliques, des sulfures métalliques, des séléniures métalliques, des sulfo-séléniures métalliques et des oxysulfures métalliques, des nitrures métalliques et des nitrures d'oxydes métalliques et des polymères organiques et des pigments.

3. Revêtement de laque autonettoyant selon l'une quelconque des revendications 1 à 2, **caractérisé en ce que** les particules formant la structure sont des oxydes métalliques du groupe SiO₂, TiO₂, Al₂O₃, ZrO₂ et SnO₂, notamment leurs oxydes fabriqués par pyrogénation.

4. Revêtement de laque autonettoyant selon l'une quelconque des revendications 1 à 3, **caractérisé en ce que** la couche de finition contient le système de liant et les particules formant la structure dans un rapport en poids dans la plage comprise entre 1 à 50 et 10 à 1, en particulier dans la plage comprise entre 1 à 5 et 5 à 1.

5. Revêtement de laque autonettoyant selon l'une quelconque des revendications 1 à 4, **caractérisé en ce que** la couche de finition et la couche de laque de fond contiennent le même système de liant.

6. Revêtement de laque autonettoyant selon l'une quelconque des revendications 1 à 5, **caractérisé en ce que**, sur au moins une partie de la surface et/ou à l'intérieur de la couche de finition, un agent d'imperméabilisation, en particulier un agent d'imperméabilisation fluoré, est lié chimiquement avec des constituants du système de liant de la couche de finition et/ou avec des groupes réactifs des particules formant la structure et/ou est fixé sous forme d'un polymère formé in situ.

7. Revêtement de laque autonettoyant selon l'une quelconque des revendications 1 à 6, **caractérisé en ce que** la couche de laque de fond et/ou la couche de finition contient comme système de liant un système à base d'une résine du groupe des résines époxy, des résines polyester, des résines polyméthane, des résines à base de cellulose et des résines vinyliques.

8. Procédé pour la fabrication d'un revêtement de laque autonettoyant selon l'une quelconque des revendications 1 à 7 comprenant l'enduction d'un substrat avec un agent de revêtement formant une couche de laque de fond à l'aide d'un procédé connu adapté à l'agent d'enduction et l'application d'un agent liquide à pâteux formant une couche de finition sur une couche de laque de fond cuite, gélifiée, durcie ou non durcie à l'aide d'un procédé courant adapté à l'état de durcissement de la couche de laque de fond pour l'enduction, le durcissement de la couche de finition et, si nécessaire, de la couche de laque de fond, **caractérisé en ce que** l'on utilise un agent pour la fabrication d'une couche de finition d'un revêtement de laque autonettoyant, comprenant un milieu liquide, au moins un agent d'imperméabilisation dissous dans celui-ci et des particules formant la structure mises en suspension uniformément dans celui-ci avec un diamètre moyen de particule compris entre moins de 50 nm et 5 nm, l'agent contenant comme particules formant la structure un ou plusieurs oxydes métalliques du groupe SiO₂, TiO₂, Al₂O₃, ZrO₂ et SnO₂, et contenant des particules formant la structure et des agents d'imperméabilisation dans un rapport en poids dans la plage comprise entre 1 à 5 et 5 à 1.

9. Procédé selon la revendication 8, **caractérisé en ce que** le milieu liquide contient un ou plusieurs liants de laque ou des précurseurs de liants polymérisables et/ou polycondensables et/ou accessibles à une polymérisation par addition.

10. Procédé selon la revendication 8 ou 9, **caractérisé en ce que** l'agent contient des liants de laque ou des précurseurs de ceux-ci et des particules formant la structure dans un rapport en poids dans la plage comprise entre 1 à 50 et 10 à 1, en particulier dans la plage comprise entre 1 à 5 et 5 à 1.

11. Procédé selon l'une quelconque des revendications 8 à 11, **caractérisé en ce que** l'agent contient un agent d'imperméabilisation réactif fluoré, en particulier un fluoroalkyl-alkoxysilane ou un fluoroalkyl-alkoxysiloxane.

12. Procédé selon l'une quelconque des revendications 8 à 11, **caractérisé en ce que** l'agent contient un ou plusieurs solvants organiques, en particulier des alcools et des alcools d'éther.

13. Procédé selon l'une quelconque des revendications 8 à12, **caractérisé en ce que** l'on applique l'agent formant la couche de finition sur une couche de laque de fond cuite au moins partiellement séchée, ladite couche étant au moins partiellement gélifiée, et/ou ladite application étant réalisée par évaporation au moins partielle des solvants contenus dans l'agent d'enduction.

14. Procédé selon l'une quelconque des revendications 8 à 13, **caractérisé en ce que** l'on applique un agent formant la couche de finition qui contient :
de 0,1% à 5% en poids de particules formant la structure, en particulier des oxydes avec un diamètre moyen de particule inférieur à 50 nm et d'au moins environ 5 nm ;
de 0,1% à 10% en poids de liants formant les couches ou de leurs précurseurs ;
de 0,1% à 5% en poids d'agents d'imperméabilisation, en particulier du groupe des alkoxysilanes et des alkoxysiloxanes fluorés ;
de 80% à 99,7% en poids d'eau et/ou d'un ou plusieurs solvants organiques, en particulier des alcools et des alcools d'éther.

15. Procédé selon l'une quelconque des revendications 8, 11 à 13, **caractérisé en ce que** l'on applique un agent formant la couche de finition qui contient des particules formant la structure, des agents d'imperméabilisation et un ou plusieurs solvants organiques, mais aucun liant, dans lequel au moins un solvant dissout superficiellement la couche de laque de fond de sorte que la couche de finition contient des liants de la couche de laque de fond.

16. Procédé selon l'une quelconque des revendications 8 à 15, **caractérisé en ce que**, après l'application d'un agent formant la couche de finition, on cuit le revêtement à l'aide d'un traitement thermique à au moins 100°C, en particulier entre 150°C et 250°C.
